# EUROPÄISCHE PATENTSCHRIFT

(11) **EP 1 463 737 B1**
(45) Veröffentlichungstag und Bekanntmachung des Hinweises auf die Patenterteilung: **10.08.2005**
(21) Anmeldenummer: 02805776.8
(22) Anmeldetag: 28.12.2002
(51) Int. Cl.: C07F 3/02

(54) **VERFAHREN ZUR HERSTELLUNG VON GRIGNARD-VERBINDUNGEN**
METHOD FOR THE PRODUCTION OF GRIGNARD COMPOUNDS
PROCEDE DE PRODUCTION DE GRIGNARD

(30) Priorität: 04.01.2002 DE 10200149
(43) Veröffentlichungstag der Anmeldung: 06.10.2004
(73) Patentinhaber: Grünenthal GmbH, 52078 Aachen (DE)
(72) Erfinder: THADEN, Bettina, 52249 Eschweiler (DE); STOLLENWERK, Heike, 52385 Nideggen (DE); KREBBER, Uwe, B-4700 Eupen (BE)
(74) Vertreter: Kutzenberger, Helga, Dr.
(86) Internationale Anmeldenummer: PCT/EP2002/014790
(87) Internationale Veröffentlichungsnummer: WO 2003/055894

(56) Entgegenhaltungen:
- EP-A- 0 755 715
- DE-A- 19 960 865
- US-A- 3 892 782
- US-A- 4 958 033
- KLABUNDE K J ET AL: "PREPARATION OF AN EXTREMELY ACTIVE MAGNESIUM SLURRY FOR GRIGNARD REAGENT PREPARATIONS BY METAL ATOM-SOLVENT COCONDENSATIONS" JOURNAL OF ORGANOMETALLIC CHEMISTRY, ELSEVIER-SEQUOIA S.A. LAUSANNE, CH, Bd. 71, Nr. 3, 1974, Seiten 309-313, XP000992732 ISSN: 0022-328X

## Beschreibung

Die vorliegende Erfindung betrifft ein Verfahren zur Herstellung von Grignard-Verbindungen, gemäß dem Magnesium in einem geeigneten flüssigen Reaktionsmedium unter Schutzgas-Atmosphäre mit Halogen-substituierten organischen Verbindungen unter Einstrahlung von Mikrowellen umgesetzt wird.

Metallorganische Verbindungen haben sich in den vergangenen Jahrzehnten trotz ihrer teilweise hohen Empfindlichkeit gegenüber Luftsauerstoff und Feuchtigkeit als eine unverzichtbare Reaktionskomponente bei der Synthese organischer Verbindungen sowohl im Labor als auch in der groß-technischen Produktion herausgestellt.

Besondere Bedeutung haben die magnesiumorganischen Verbindungen erlangt, zu denen auch die sogenannten Grignard-Verbindungen zählen. Diese Grignard-Verbindungen können durch Umsetzung von Magnesium mit Halogen-substituierten organischen Verbindungen unter Schutzgas-Atmosphäre in einem geeigneten Reaktionsmedium gewonnen werden und weisen eine stark polarisierte Magnesium-Kohlenstoff-Bindung auf, in der das Kohlenstoffatom die negative Ladungsdichte trägt, siehe z.B. "Grignard Reagents: New Developments", Herman G. Richey Jr., John Wiley and Sons Ltd, 2000, Seiten 185 bis 275, "Organomagnesium Methods in Organic Synthesis", Basil J. Wakefield, Academic Press, London, 1995, Seiten 21 bis 71 und "Handbook of Grignard Reagents", Gary S. Silverman, Philip E. Rakita, Marcel Dekker, Inc., New York, 1996, Seiten 53 bis 77.

Die Grignard-Verbindungen reagieren daher als nukleophile Reagenzien leicht mit elektrophilen Verbindungen unter Bildung einer neuen Kohlenstoff-Kohlenstoff-Bindung und eignen sich somit zur Synthese größerer organischer Verbindungen aus entsprechenden Fragmenten.

In der Praxis erweist sich die Herstellung von Grignard-Verbindungen häufig als schwierig, da die Oberfläche des Magnesiums üblicherweise durch eine Magnesiumoxidschicht passiviert ist, welche die Reaktion des Magnesiums mit der

Halogen-substituierten organischen Verbindung deutlich erschwert oder gar verhindert.

Es wurden daher verschiedene Verfahren entwickelt, um die Oberfläche des Magnesiums zu aktivieren. Beispielhaft seien die chemische Aktivierung durch Mineralsäuren, elementares Jod oder durch Lithiumsalze sowie die physikalische Aktivierung durch Erwärmen oder durch Ultraschall-Behandlung genannt.

EP-0755715 betrifft ein Verfahren zur Herstellung von Grignard-Verbindungen unter Einwirkung von Ultraschall.

US-4958033 beschreibt die Herstellung von Grignard-Verbindungen wobei das Magnesium durch Zinkchlorid aktiviert wird.

US-3892782 beschreibt die Herstellung von Grignard-Verbindungen wobei das Magnesium durch Quecksilberchlorid aktiviert wird.

DE-19960865 betrifft ein Verfahren zu Herstellung von Grignard-Verbindungen unter mechanischer Aktivierung des Magnesium mit Dispergiermaschinen oder Mahleinrichtungen.

J. Organometallic Chem. **1974**, 71(3), 309-313 beschreibt die Herstellung von Grignard-Verbindungen wobei Magnesium durch Verdampfung und Kondensation mit einem Lösungsmittel aktiviert wird.

Nachteilig ist bei diesen Verfahren zur Aktivierung des Magnesiums jedoch, daß aufgrund der langen Reaktionszeiten und gegebenenfalls der erhöhten Reaktionstemperaturen außer der gewünschten Grignard-Verbindung häufig auch unerwünschte Nebenprodukte gebildet werden, wie z.B. Kohlenwasserstoffverbindungen durch die Reaktion zweier mit Halogen substituierten organischen Verbindungen im Sinne einer Wurtz-Kopplung.

Diese Nebenreaktionen führen einerseits dazu, daß die Ausbeute an der gewünschten Grignard-Verbindung und somit auch die Ausbeute des daraus hergestellten Folgeproduktes verringert wird. Andererseits erschweren oder verhindern diese Nebenreaktionen häufig auch den Einsatz von Grignard-Verbindungen in einer Synthese, da die nachfolgend erforderlichen Reinigungsschritte das Verfahren unwirtschaftlich machen oder aufgrund geringer Substanzmengen, wie z.B. im Bereich der kombinatorischen Chemie, überhaupt nicht durchführbar sind.

Aufgabe der vorliegenden Erfindung war es daher, ein Verfahren zur Herstellung von Grignard-Verbindungen zur Verfügung zu stellen, mit dem diese Verbindungen innerhalb kurzer Reaktionszeiten und in hohen Ausbeuten erhalten werden. Darüber hinaus sollen sich die erhaltenen Grignard-Verbindungen vorzugsweise auch durch eine gute bis sehr gute Reinheit auszeichnen.

Erfindungsgemäß wird diese Aufgabe durch ein Verfahren zur Herstellung von wenigstens einer Grignard-Verbindung gelöst, indem Magnesium in einem geeigneten flüssigen Reaktionsmedium unter Schutzgasatmosphäre mit wenigstens einer mit Halogen substituierten organischen Verbindung, vorzugsweise einer mit Halogen substituierten organischen Kohlenwasserstoff-Verbindung unter Einstrahlung von Mikrowellen umgesetzt wird.

Das Magnesium wird in dem erfindungsgemäßen Verfahren bevorzugt in Form eines Bands oder in multipartikulärer Form, besonders bevorzugt in Form von Spänen oder Pulver, eingesetzt. Ganz besonders bevorzugt wird das Magnesium in Form von üblichen im Handel erhältlichen Spänen eingesetzt.

Als geeignete Reaktionsmedien können sämtliche, dem Fachmann zur Herstellung von Grignard-Verbindungen an sich bekannte Reaktionsmedien zum Einsatz kommen, wie beispielsweise in "Grignard Reagents: New Developments", Herman G. Richey Jr., John Wiley and Sons Ltd, 2000, Seiten 185 bis 275, "Organomagnesium Methods in Organic Synthesis", Basil J. Wakefield, Academic Press, London, 1995, Seiten 21 bis 71 und "Handbook of Grignard Reagents", Gary S. Silverman, Philip E. Rakita, Marcel Dekker, Inc., New York, 1996, Seiten 53 bis 77 beschrieben.

Vorzugsweise ist das Reaktionsmedium eine Ether-Verbindung oder ein Gemisch enthaltend zumindest eine Ether-Verbindung. Die Ether-Verbindung ist bevorzugt ausgewählt aus der Gruppe umfassend aliphatische Ether, zyklische Ether und aliphatische Polyether. Es können auch Mischungen aus zwei oder mehreren Vertretern einer oder mehrerer der vorstehend genannten Klassen von Ethern zum Einsatz kommen.

Als aliphatische Ether kommen bevorzugt Dialkylether, wie beispielsweise Diethylether, Dibutylether oder deren Mischungen in Betracht.

Bevorzugte zyklische Ether sind Tetrahydrofuran, 1,4-Dioxan oder deren Mischungen.

Bevorzugte aliphatische Polyether basieren auf Alkylenglykolen, wie beispielsweise Ethylenglykol und sind besonders bevorzugt ausgewählt aus der Gruppe umfassend Ethylenglykoldimethylether (Monoglyme), Diethylenglykoldimethylether (Diglyme), Triethylenglykoldimethylether (Triglyme) und Mischungen enthaltend wenigstens zwei dieser vorstehend genannten Polyether.

Das Mengenverhältnis von Halogen-substituierter organischer Verbindung zu dem Reaktionsmedium kann über einen weiten Bereich variieren. Das jeweils optimale Mengenverhältnis kann, sofern erforderlich, vom Fachmann mit Hilfe von einfachen Vorversuchen ermittelt werden.

Für eine gute Ausbeute einer erfindungsgemäß hergestellten Grignard-Verbindung ist es vorteilhaft, daß das zum Einsatz kommende Reaktionsmedium keine oder zumindest möglichst geringe Mengen an Sauerstoff, Kohlendioxid und Feuchtigkeit aufweist. Das jeweilige Reaktionsmedium wird daher vorzugsweise vor der Umsetzung nach üblichen, dem Fachmann bekannten Methoden von diesen Gasen befreit und/oder getrocknet.

Nach dem erfindungsgemäßen Verfahren können auch verschiedene Halogen-substituierte organische Verbindungen gleichzeitig mit dem Magnesium umgesetzt werden. Vorzugsweise wird jeweils nur eine Halogen-substituierte organische Verbindung nach dem erfindungsgemäßen Verfahren umgesetzt.

Ferner können bei dem erfindungsgemäßen Verfahren selbstverständlich nicht nur organische Verbindungen zum Einsatz kommen, die ein Halogenatom als Substituenten aufweisen, sondern auch solche, die mit zwei oder mehr, gegebenenfalls unterschiedlichen Halogenatomen substituiert sind.

Als mit Halogen substituierte organische Verbindungen werden für die erfindungsgemäße Umsetzung bevorzugt aliphatische Halogenverbindungen, gegebenenfalls zumindest ein Heteroatom im Ringsystem aufweisende cycloaliphatische Halogenverbindungen oder gegebenenfalls zumindest ein Heteroatom im Ringsystem aufweisende aromatische Halogenverbindungen eingesetzt. Als gesättigte oder ungesättigte, aliphatische Halogenverbindungen kommen bevorzugt solche Verbindungen in Betracht, die 1 bis 10 Kohlenstoffatome, besonders bevorzugt 1 bis 5 Kohlenstoffatome und ganz besonders bevorzugt 1 bis 3 Kohlenstoffatome aufweisen. Bevorzugte cycloaliphatische Halogenverbindungen, die gegebenenfalls wenigstens ein Heteroatom im Ringsystem aufweisen, sind solche mit 3 bis 8 Kohlenstoffatomen.

Diese Halogeverbindungen können mit Fluor, Chlor, Brom oder Jod, bevorzugt mit Chlor, Brom oder Jod, besonders bevorzugt mit Brom oder Jod substituiert sein.

Als aromatische Halogenverbindungen eignen sich vorzugsweise Verbindungen der allgemeinen Formel I oder II 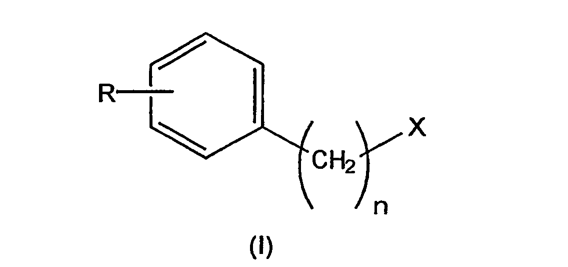 mit n = 1, 2 oder 3 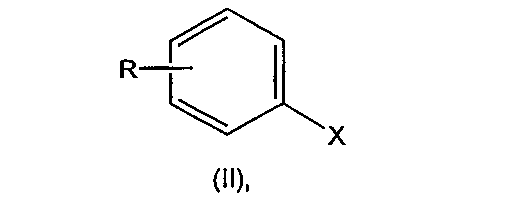 in denen X jeweils für F, Cl, Br oder I, bevorzugt für Cl, Br oder I, besonders bevorzugt für Br oder I steht, und der Substituent R ausgewählt ist aus der Gruppe bestehend aus F, Cl, Br, I, einem gegebenenfalls zumindest einfach mit Fluor substituiertem C₁₋₅-Alkyl-Rest, einem C₁₋₅-Alkoxy-Rest, einem NO₂-Rest, einem N(R¹)₂-Rest, einem CON(R¹)₂-Rest, einem SR¹-Rest, einem SOR¹-Rest, einem SO₂R¹-Rest, einem SO₂N(R¹)₂-Rest, einem Rest der allgemeinen Formeln III bis VI 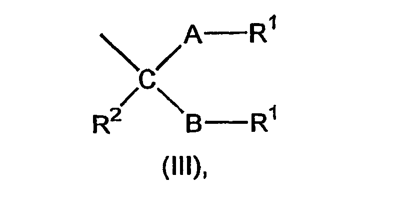 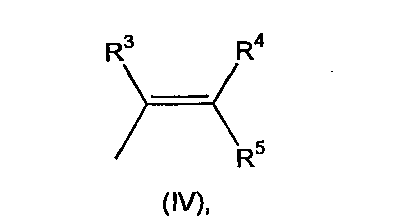 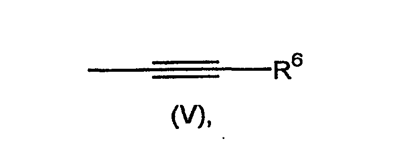 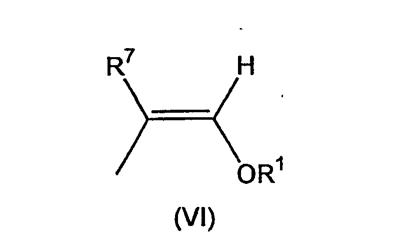 und einem Aryl- oder Heteroaryl-Rest, der gegebenenfalls mit R' wenigstens einfach substituiert sein kann,
wobei
A und B, gleich oder verschieden, für O, S oder NH, vorzugsweise beide für O stehen.
der Rest R¹ jeweils für einen C₁₋₆-Alkyl-Rest, vorzugsweise für einen C₁₋₃-AlkylRest, besonders bevorzugt für einen Methyl- oder Ethyl-Rest steht
oder - im Fall der allgemeinen Formel III - die beiden Reste R¹ als Ringglieder die Gruppe CH₂-CH₂ oder CH₂-CH₂-CH₂ bedeuten,
die Reste R², R³, R⁴, R⁵, R⁶ und R⁷, jeweils unabhängig voneinander, für H, einen C₁₋₆-Alkyl-Rest, vorzugsweise einen C₁₋₃-Alkyl-Rest, besonders bevorzugt einen Methyl- oder Ethyl-Rest, oder für einen gegebenfalls substituierten und/oder gegebenenfalls zumindest ein Heteroatom aufweisenden Aryl-Rest, vorzugsweise für einen gegebenenfalls substituierten Phenyl-Rest, besonders bevorzugt für einen unsubstituierten Phenyl-Rest stehen, und
R' ausgewählt ist aus der Gruppe bestehend aus F, Cl, Br, I, einem gegebenenfalls zumindest einfach mit Fluor substituiertem C₁₋₅-Alkyl-Rest, einem C₁₋₅-Alkoxy-Rest, einem NO₂-Rest, einem N(R¹)₂-Rest, einem CON(R¹)₂-Rest, einem SR¹-Rest, einem SOR¹-Rest, einem SO₂R¹-Rest, einem SO₂N(R¹)₂-Rest und einem Rest der vorstehend genannten allgemeinen Formeln III bis VI.

Sofern eine der vorstehend genannten cycloaliphatischen oder aromatischen Halogenverbindungen wenigstens ein Heteroatom im Ringsystem aufweist, kann dies bevorzugt ausgewählt werden aus der Gruppe bestehend aus Sauerstoff, Schwefel und Stickstoff.

Sofern als aromatische Halogenverbindung eine Verbindung der allgemeinen Formel II zum Einsatz kommt, ist bevorzugt o-Bromanisol, m-Bromanisol, p-Bromanisol, o-Brombenzotrifluorid, m-Brombenzotrifluorid oder p-Brombenzotrifluorid, besonders bevorzugt m-Bromanisol für die erfindungsgemäße Umsetzung geeignet.

Das molare Verhältnis von Magnesium zu Halogen-substituierter organischer Verbindung kann variieren. Vorzugsweise werden das Magnesium und die mit Halogen substituierte organische Verbindung in äquimolaren Mengen eingesetzt, weil dadurch üblicherweise die beste Ausbeute an gewünschter Grignard-Verbindung erzielt wird.

Das erfindungsgemäße Verfahren kann unter den für die Herstellung von Grignard-Verbindungen üblichen, dem Fachmann bekannten Schutzgas-Bedingungen erfolgen. Vorzugsweise ist die Schutzgas-Atmosphäre eine Atmosphäre aus Argon und/oder Stickstoff, wie beispielsweise in "Grignard Reagents: New Developments", Herman G. Richey Jr., John Wiley and Sons Ltd, 2000, Seiten 185 bis 275 beschrieben.

Die Leistung, mit der die Mikrowellen eingestrahlt werden, sowie die Frequenz der eingestrahlten Mikrowellen können erfindungsgemäß ebenfalls über einen breiten Bereich variieren.

Vorzugsweise erfolgt die Einstrahlung von Mikrowellen mit einer Leistung von 100 bis 1200 Watt, besonders bevorzugt 100 bis 250 Watt.

Die Frequenz der eingestrahlten Mikrowellen liegt bevorzugt im Bereich von 850 bis 22250 MHz, besonders bevorzugt im Bereich 915 ± 25 MHz, 2450 ± 13MHz, 5800 ± 75 MHz oder 22125 ± 125 MHz.

Die Reaktionsdauer zur Durchführung des erfindungsgemäßen Verfahrens kann in Abhängigkeit von einer Vielzahl von Parametern variieren, beispielsweise der Art der mit Halogen substituierten organischen Verbindung, der Art des Reaktionsmediums und/oder der Reaktionstemperatur. Die jeweils optimale Reaktionsdauer kann vom Fachmann durch einfache Vorversuche ermittelt werden.

Vorzugsweise beträgt die Reaktionsdauer in dem erfindungsgemäßen Verfahren nicht mehr als 60 Minuten, besonders bevorzugt nicht mehr als 45 Minuten und ganz besonders bevorzugt nicht mehr als 30 Minuten.

In einer bevorzugten Ausführungsform des erfindungsgemäßen Verfahrens erfolgt die Umsetzung bei einer Temperatur bis höchstens zur Siedetemperatur des flüssigen Reaktionsmediums. Vorzugsweise wird unter Rückfluß des flüssigen Reaktionsmediums umgesetzt.

Der Zeitpunkt, zu dem mit der Einstrahlung der Mikrowellen für die Umsetzung begonnen wird sowie die Dauer der Mikrowelleneinstrahlung können ebenfalls variieren.

So ist es beispielsweise möglich, erst nach Zugabe aller Reaktionskomponenten zu dem Reaktionsmedium mit der Einstrahlung der Mikrowellen zu beginnen. Alternativ dazu kann z.B. das Magnesium in dem Reaktionsmedium vorgelegt, ein Teil der mit Halogen substituierten organischen Verbindung zugeben, dann mit der Einstrahlung der Mikrowellen begonnen und dann der Rest der mit Halogen substituierten organischen Verbindung weiter zugegeben werden.

Die Einstrahlung mit Mikrowellen kann beispielsweise nur bis zum Beginn der Reaktion des Magnesiums mit der Halogen-substituierten organischen Verbindung, dem sogenannten Anspringen der Reaktion, oder während der gesamten Umsetzung erfolgen.

Nach dem erfindungsgemäßen Verfahren lassen sich Grignard-Verbindungen in sehr guter Ausbeute und innerhalb kurzer Reaktionszeiten herstellen. Die nach dem erfindungsgemäßen Verfahren erhaltenen Grignard-Verbindungen zeichnen sich ferner durch eine hohe Reinheit aus, so daß sie sich ausgezeichnet zur Herstellung von chemischen Verbindungen eignen, die nach ihrer Herstellung üblicherweise keinem weiteren Reinigungsschritt unterworfen werden sollen, wie z.B. mit Hilfe von kombinatorischer Chemie hergestellte Substanzbibliotheken.

Im folgenden wird die Erfindung anhand von Beispielen erläutert.

### Beispiele:

Die eingesetzten Chemikalien und Reaktionsmedien wurden bei den herkömmlichen Anbietem (Acros, Aldrich, Fluka, Lancaster, Merck) käuflich erworben.

Die gaschromatographischen Analysen wurden mit dem Gaschromatographen HP 6890 mit PTV (Programmed Temperature Vaporization (Inlet))-Injektor und einem daran gekoppelten Massen-Detektor (Mass selective Detector) 5973 (Hewlett-Packard, jetzt Agilent Technologies Deutschland GmbH, Hewlett-Packard-Straße 8, 76337 Waldbronn) oder mit dem Gaschromatographen GC 17 A (Shimadzu Deutschland GmbH, Albert-Hahn-Straße 6 bis 10, 47269 Duisburg) durchgeführt.

### Beispiel 1a):

### Herstellung der Grignard-Verbindung von m-Bromanisol:

In einem Mikrowellengerät des Typs MLS ETHOS 600 (MLS-GmbH, Auenweg 37, 88299 Leutkirch, Deutschland) wurde eine Apparatur bestehend aus einem 250 ml Zweihalskolben mit einem Temperaturfühler und einem 40 cm langen Steigrohr, auf das ein Zweihals-Aufsatz mit einem Tropftrichter mit Druckausgleich und ein ummantelter Rückflußkühler sowie einem Einlaß für Schutzgas gesetzt wurden, aufgebaut.
Anschließend wurden in dem Zweihalskolben 50 mmol Magnesiumspäne in 20 ml getrocknetem, mit Stickstoff begastem Tetrahydrofuran vorgelegt und die Apparatur unter Stickstoffatmospäre gesetzt. Unter Einstrahlung von Mikrowellen mit einer Leistung von 250 Watt wurden 1 g m-Bromanisol (entsprechend 10 Gew.-% der Gesamtmenge an m-Bromanisol) zugetropft. Das so erhaltene Gemisch wurde anschließend weiter mit Mikrowellen unter einer Leistung von 100 Watt bestrahlt. Nach dem Anspringen der Reaktion - das Reaktionsmedium wurde trübe - wurde die restliche Menge des m-Bromanisols zugetropft und die Bestrahlung mit Mikrowellen bei einer Leistung von 100 Watt fortgesetzt.

In Zeitabständen von jeweils fünf Minuten, beginnend nach vollständiger Zugabe des gesamten m-Bromanisols, wurden mit einer Spritze Proben entnommen, die dann zur Hydrolyse der entstandenen Grignard-Verbindung in eine gesättigte Ammoniumchlorid-Lösung gegeben wurden. Die so erhaltene wäßrige Lösung wurde dann mit Hilfe von Diethylether extrahiert und durch Gaschromatograhie, ggf. in Kombination mit Massenspektrometrie analysiert. Diese Analyse gibt Aufschluß über den Gehalt an entstandener Grignard-Verbindung, nicht umgesetzter Halogenverbindung sowie unerwünschter Nebenprodukte.

Die ermittelten Mengen des durch Hydrolyse der Grignard-Verbindung entstandenen Anisols, nicht umgesetzten m-Bromanisol sowie die Menge der unerwünschten Nebenprodukte sind in der nachstehenden Tabelle 1 a wiedergegeben:

**Tabelle 1a):**

| Reaktionsdauer in Minuten | % Anisol | % m-Bromanisol | % Nebenprodukte |
|---|---|---|---|
| 5 | 66 | 23 | 11 |
| 10 | 78 | 12 | 10 |
| 15 | 89 | 7 | 4 |

### Beispiel 1b)

### Herstellung der Grignard-Verbindung von m-Bromanisol:

Der Aufbau, die Durchführung und die Analyse erfolgten gemäß der Vorschrift zu Beispiel 1 a. Abweichend von dieser Vorschrift erfolgte die Einstrahlung von Mikrowellen erst nach vollständiger Zugabe der gesamten Menge des m-Bromanisols. Die Dauer der Mikrowellenbestrahlung betrug 30 Minuten bei einer Leistung von 100 Watt.

Die ermittelten Mengen an durch Hydrolyse der Grignard-Verbindung entstandenem Anisol, nicht umgesetzten m-Bromanisol sowie die Menge der unerwünschten Nebenprodukte sind in der nachstehenden Tabelle 1 b wiedergegeben:

**Tabelle 1b):**

| Reaktionsdauer in Minuten | % Anisol | % m-Bromanisol | % Nebenprodukte |
|---|---|---|---|
| 5 | 80 | 15 | 5 |
| 10 | 93 | 6 | 1 |
| 15 | 96 | 4 | --- |
| 20 | 96 | 4 | --- |
| 25 | 99 | 1 | --- |

### Beispiel 1c)

### Herstellung der Grignard-Verbindung von m-Bromanisol:

Der Aufbau, die Durchführung und die Analyse erfolgten gemäß der Vorschrift zu Beispiel 1a. Abweichend von dieser Vorschrift erfolgte die Einstrahlung von Mikrowellen mit einer Leistung von 100 Watt nur bis zum Anspringen der Reaktion. Anschließend wurde noch 30 bei Raumtemperatur Minuten nachgerührt.

Die ermittelten Mengen an durch Hydrolyse der Grignard-Verbindung entstandenem Anisol, nicht umgesetzten m-Bromanisol sowie die Menge der unerwünschten Nebenprodukte sind in der nachstehenden Tabelle 1c wiedergegeben:

**Tabelle 1c):**

| Reaktionsdauer in Minuten | % Anisol | % m-Bromanisol | % Nebenprodukte |
|---|---|---|---|
| 28 | 88 | 12 | -- |

### Beispiel 2):

### Herstellung der Grignard-Verbindung von m-Bromanisol

Der Aufbau, die Durchführung und die Analyse erfolgten gemäß der Vorschrift zu Beispiel 1a. Abweichend davon wurden als Reaktionsmedium 20 ml getrocknetes Dioxan eingesetzt. Die ermittelten Mengen des durch Hydrolyse der Grignard-Verbindung entstandenen Anisols, nicht umgesetztem m-Bromanisol sowie die Menge der unerwünschten Nebenprodukte sind in der untenstehenden Tabelle 2 wiedergegeben:

### Vergleichsbeispiel 1):

### Herstellung der Grignard-Verbindung von m-Bromanisol ohne Einstrahlung von Mikrowellen:

In einem 250 ml Dreihalskolben mit Intensivkühler, Tropftrichter mit Druckausgleich und Schutzgaseinlaß und -auslaß wurden unter Stickstoffatmosphäre 50 mmol Magnesiumspäne in getrocknetem Dioxan vorgelegt, 9,56 g (50 mmol) m-Bromanisol zugetropft und nach vollständiger Zugabe des m-Bromanisols drei Stunden unter Rückfluß erhitzt.

Die Analyse des Reaktionsgemisches erfolgte gemäß Beispiel 1 a.

Die ermittelten Mengen des durch Hydrolyse der Grignard-Verbindung entstandenen Anisols, nicht umgesetzten m-Bromanisol sowie die Menge der unerwünschten Nebenprodukte sind in der nachstehenden Tabelle 2 wiedergegeben:

**Tabelle 2):**

| Reaktionsdauer | % Anisol | % m-Bromanisol | % Nebenprodukte |
|---|---|---|---|
| **Beispiel 2** | | | |
| 25 Minuten | 96 | 2 | 2 |

| **Vergleichsbeispiel 1** | | | |
|---|---|---|---|
| 180 Minuten | keine Reaktion | | |

Während die Herstellung der Grignard-Verbindung von m-Bromanisol nach dem erfindungsgemäßen Verfahren in sehr kurzer Reaktionszeit mit einer sehr guten Ausbeute und einer sehr guten Reinheit gelingt, führt die Herstellung nach dem herkömmlichen Verfahren zur Herstellung von Grignard-Verbindungen zu keiner Umsetzung zwischen den Reaktionskomponenten.

### Beispiel 3):

### Herstellung der Grignard-Verbindung von m-Brombenzotrifluorid

Die Durchführung erfolgte gemäß Beispiel 1 b. Abweichend davon wurde als Halogen substituierte organische Verbindung m-Brombenzotrifluorid eingesetzt. Die Dauer der Mikrowellenbestrahlung betrug 55 Minuten bei einer Leistung von 100 bis 150 Watt.

Die ermittelten Menge des durch Hydrolyse der Grignard-Verbindung entstandenen Benzotrifluorids, nicht umgesetzten m-Brombenzotrifluorid sowie die Menge der unerwünschten Nebenprodukte sind in der untenstehenden Tabelle 3 wiedergegeben.

### Vergleichsbeispiel 2):

Die Durchführung erfolgte gemäß Vergleichsbeispiel 1. Abweichend davon wurde als Halogen-substituierte organische Verbindung m-Brombenzotrifluorid eingesetzt.

Die ermittelten Menge des durch Hydrolyse der Grignard-Verbindung entstandenen Benzotrifluorids, nicht umgesetzten m-Brombenzotrifluorid sowie die Menge der unerwünschten Nebenprodukte sind in der nachstehenden Tabelle 3 wiedergegeben

**Tabelle 3:**

| Reaktionsdauer in Minuten | % Benzotrifluorid | % m-Brombenzotrifluorid | % Nebenprodukte |
|---|---|---|---|
| **Beispiel 3** | | | |
| 5 | 74 | 26 | --- |
| 10 | 69 | 31 | --- |
| 15 | 71 | 29 | --- |
| 30 | 50 | 42 | 8 |
| 40 | 34 | 52 | 14 |
| 55 | 34 | 52 | 14 |
| | | | |

| **Vergleichsbeispiel 2** | | | |
|---|---|---|---|
| 180 Minuten | 31 | 33 | 36 |

Neben einer Verbesserung der Ausbeute an der gewünschten Grignard-Verbindung entsteht bei der Herstellung nach dem erfindungsgemäßen Verfahren eine geringere Menge an unerwünschten Nebenprodukten.

### Beispiel 4:

### Herstellung der Grignard-Verbindung von p-Chlorbenzylchlorid

Die Durchführung erfolgte gemäß Beispiel 1b. Abweichend davon wurde als mit Halogen substituierte organische Verbindung p-Chlorbenzylchlorid und als Reaktionsmedium getrockneter Diethylether eingesetzt. Die Dauer der Mikrowellenbestrahlung betrug 15 Minuten bei einer Leistung von 100 bis 150 Watt.

Die ermittelten Menge des durch Hydrolyse der Grignard-Verbindung entstandenen Benzylchlorids, nicht umgesetzten p-Chlorbenzylchlorid sowie die Menge der unerwünschten Nebenprodukte sind in der untenstehenden Tabelle 4 wiedergegeben.

### Vergleichsbeispiel 3:

Die Durchführung erfolgte gemäß Vergleichsbeispiel 1. Abweichend davon wurde als mit Halogen substituierte organische Verbindung p-Chlorbenzylchlorid und als Reaktionsmedium getrockneter Diethylether eingesetzt.

Die ermittelten Menge des durch Hydrolyse der Grignard-Verbindung entstandenen Benzylchlorids, nicht umgesetzten p-Chlorbenzylchlorid sowie die Menge der unerwünschten Nebenprodukte sind in der nachstehenden Tabelle 4 wiedergegeben.

**Tabelle 4:**

| Reaktionsdauer in Minuten | % Benzylchlorid | p-Chlorbenzylchlorid | % Nebenprodukte |
|---|---|---|---|
| **Beispiel 4** | | | |
| 5 | 59 | 20 | 21 |
| 10 | 62 | 9 | 29 |
| 15 | 72 | 3 | 25 |

| **Vergleichsbeispiel 3** | | | |
|---|---|---|---|
| 180 Minuten | 45 | 31 | 24 |

Bei einem unveränderten Gehalt an Nebenprodukten kann die gewünschte Grignard-Verbindung innerhalb einer wesentlich kürzeren Reaktionszeit in hervorragender Ausbeute erhalten werden.

## Patentansprüche

1. Verfahren zur Herstellung wenigstens einer Grignard-Verbindung, **dadurch gekennzeichnet, daß** Magnesium in einem geeigneten flüssigen Reaktionsmedium unter Schutzgas-Atmosphäre mit wenigstens einer Halogen-substituierten organischen Verbindung unter Einstrahlung von Mikrowellen umgesetzt wird.

2. Verfahren gemäß Anspruch 1, **dadurch gekennzeichnet, daß** das Magnesium in Form von Magnesium-Band oder in multipartikulärer Form, vorzugsweise in Form von Spänen oder Pulver, besonders bevorzugt in Form von Spänen vorliegt.

3. Verfahren gemäß Anspruch 1 oder 2, **dadurch gekennzeichnet, daß** als Reaktionsmedium wenigstens eine Ether-Verbindung oder ein Gemisch enthaltend wenigstens eine Ether-Verbindung vorliegt.

4. Verfahren gemäß Anspruch 3, **dadurch gekennzeichnet, daß** die Ether-Verbindung ausgewählt ist aus der Gruppe bestehend aus aliphatischen Ethern, zyklischen Ethern und aliphatischen Polyethern.

5. Verfahren gemäß Anspruch 4, **dadurch gekennzeichnet, daß** als aliphatischer Ether wenigstens ein Dialkylether, vorzugsweise Diethylether, Dibutylether oder deren Mischung vorliegt.

6. Verfahren gemäß Anspruch 4 oder 5, **dadurch gekennzeichnet, daß** als zyklischer Ether Tetrahydrofuran, 1,4-Dioxan oder deren Mischung vorliegt.

7. Verfahren gemäß einem der Ansprüche 4 bis 6, **dadurch gekennzeichnet, daß** der aliphatische Polyether auf einem Alkylenglykol, vorzugsweise auf Ethylenglykol basiert.

8. Verfahren gemäß Anspruch 7, **dadurch gekennzeichnet, daß** der Polyether ausgewählt ist aus der Gruppe bestehend aus Ethylenglykoldimethylether (Monoglyme), Diethylenglykol-dimethylether (Diglyme) und Triethylenglykoldimethylether (Triglyme) und Mischungen aus wenigstens zwei dieser Polyether.

9. Verfahren gemäß einem der Ansprüche 1 bis 8, **dadurch gekennzeichnet, daß** als eine mit Halogen substituierte organische Verbindung eine aliphatische Halogenverbindung, eine gegebenenfalls zumindest ein Heteroatom im Ringsystem aufweisende cycloaliphatische Halogenverbindung oder eine gegebenenfalls zumindest ein Heteroatom im Ringsystem aufweisende aromatische Halogenverbindung eingesetzt wird.

10. Verfahren gemäß Anspruch 9, **dadurch gekennzeichnet, daß** die aliphatische Halogenverbindung 1 bis 10 Kohlenstoffatome, vorzugsweise 1 bis 5 Kohlenstoffatome, besonders bevorzugt 1 bis 3 Kohlenstoffatome aufweist.

11. Verfahren gemäß Anspruch 9, **dadurch gekennzeichnet, daß** die cycloaliphatische Halogenverbindung 3 bis 8 Kohlenstoffatome aufweist.

12. Verfahren gemäß einem der Ansprüche 1 bis 11, **dadurch gekennzeichnet, daß** die Halogenverbindung mit Fluor, Chlor, Brom oder Jod, vorzugsweise mit Chlor, Brom oder Jod, besonders bevorzugt mit Brom oder Jod substituiert ist.

13. Verfahren gemäß Anspruch 9, **dadurch gekennzeichnet, daß** als aromatische Halogenverbindung eine Verbindungen der allgemeinen Formel I oder II 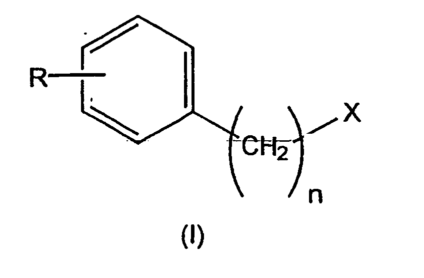 mit n = 1, 2 oder 3 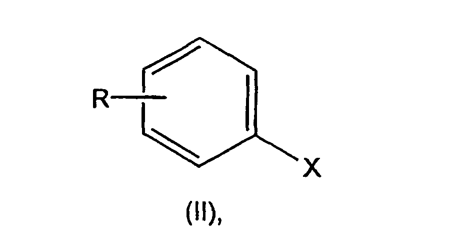 zum Einsatz kommt,
worin X jeweils für F, Cl, Br oder I steht,
und der Substituent R ausgewählt ist aus der Gruppe bestehend aus F, Cl, Br, I, einem gegebenenfalls zumindest einfach mit Fluor substituiertem C₁₋₅-AlkylRest, einem C₁₋₅-Alkoxy-Rest, einem NO₂-Rest, einem N(R¹)₂-Rest, einem CON(R¹)₂-Rest, einem SR¹-Rest, einem SOR¹-Rest, einem SO₂R¹-Rest, einem SO₂N(R¹)₂-Rest, einem Rest der allgemeinen Formel III bis VI 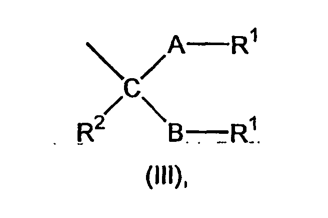 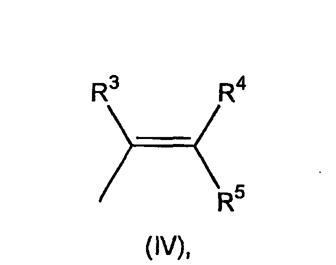 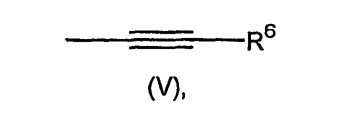 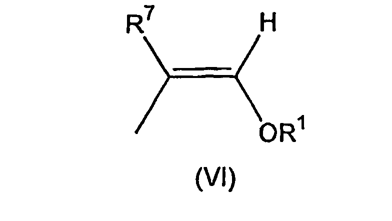 und einem Aryl- oder Heteroaryl-Rest, der gegebenfalls mit R' wenigstens einfach substituiert sein kann, wobei
A und B, gleich oder verschieden, für O, S oder NH stehen,
der Rest R¹ jeweils für einen C₁₋₆-Alkyl-Rest steht,
oder - im Fall der allgemeinen Formel III - die beiden Reste R¹ als Ringglieder die Gruppe CH₂-CH₂ oder CH₂-CH₂-CH₂ bedeuten,
die Reste R², R³, R⁴, R⁵, R⁶ und R⁷, jeweils unabhängig voneinander, für H, einen C₁₋₆-Alkyl-Rest oder für einen gegebenfalls substituierten und/oder gegebenenfalls ein Heteroatom aufweisenden Aryl-Rest stehen, und
der Rest R' ausgewählt ist aus der Gruppe bestehend aus F, Cl, Br, I, einem gegebenenfalls zumindest einfach mit Fluor substituiertem C₁₋₅-Alkyl-Rest, einem C₁₋₅-Alkoxy-Rest, einem NO₂-Rest, einem N(R¹)₂-Rest, einem CON(R¹)₂-Rest, einem SR¹-Rest, einem SOR¹-Rest, einem SO₂R¹-Rest, einem SO₂N(R¹)₂-Rest und einem Rest der vorstehend angegebenen allgemeinen Formel III bis VI.

14. Verfahren gemäß Anspruch 13, **dadurch gekennzeichnet, daß** X für Cl, Br oder I, vorzugsweise für Br oder I steht.

15. Verfahren gemäß Anspruch 13 oder 14, **dadurch gekennzeichnet, daß** der Rest R¹ für einen C₁₋₃-Alkyl-Rest, vorzugsweise für einen Methyl- oder Ethyl-Rest steht.

16. Verfahren gemäß einem der Ansprüche 13 bis 15, **dadurch gekennzeichnet, daß** die Reste R², R³, R⁴, R⁵, R⁶ und R⁷, jeweils unabhängig voneinander, für einen C₁₋₃-Alkyl-Rest, vorzugsweise für einen Methyl- oder Ethyl-Rest, oder für einen gegebenenfalls substituierten Phenyl-Rest, vorzugsweise für einen unsubstituierten Phenyl-Rest stehen.

17. Verfahren gemäß einem der Ansprüche 13 bis 16, **dadurch gekennzeichnet, daß** A und B jeweils für O stehen.

18. Verfahren gemäß Anspruch 13, **dadurch gekennzeichnet, daß** die Verbindung der allgemeinen Formel II ausgewählt ist aus der Gruppe bestehend aus o-Bromanisol, m-Bromanisol, p-Bromanisol, o-Brombenzotrifluorid, m-Brombenzotrifluorid und p-Brombenzotrifluorid, vorzugsweise m-Bromanisol.

19. Verfahren gemäß Anspruch 13, **dadurch gekennzeichnet, daß** als Verbindung der allgemeinen Formel I p-Chlorbenzylchlorid eingesetzt wird.

20. Verfahren gemäß einem der Ansprüche 1 bis 19, **dadurch gekennzeichnet, daß** das Magnesium und die mit Halogen substituierte(n) organische(n) Verbindung(en) in äquimolaren Mengen eingesetzt werden.

21. Verfahren gemäß einem der Ansprüche 1 bis 20, **dadurch gekennzeichnet, daß** die Schutzgas-Atmosphäre eine Atmosphäre aus Argon und/oder Stickstoff ist.

22. Verfahren gemäß einem der Ansprüche 1 bis 21, **dadurch gekennzeichnet, daß** die Einstrahlung mit Mikrowellen bei einer Leistung von 100 bis 1200 Watt, vorzugsweise 100 bis 250 Watt erfolgt.

23. Verfahren gemäß einem der Ansprüche 1 bis 22, **dadurch gekennzeichnet, daß** die Einstrahlung mit Mikrowellen einer Frequenz im Bereich von 850 bis 2250 MHz, vorzugsweise im Bereich 915 ± 25 MHz, 2450 ± 13MHz, 5800 ± 75 MHz oder 22125 ± 125 MHz erfolgt.

24. Verfahren gemäß einem der Ansprüche 1 bis 23, **dadurch gekennzeichnet, daß** die Reaktionsdauer nicht mehr als 60 Minuten, vorzugsweise nicht mehr als 45 Minuten, besonders bevorzugt nicht mehr als 30 Minuten beträgt.

25. Verfahren gemäß einem der Ansprüche 1 bis 24, **dadurch gekennzeichnet, daß** die Umsetzung bei einer Temperatur bis höchstens zur Siedetemperatur des flüssigen Reaktionsmediums erfolgt.

26. Verfahren gemäß Anspruch 25, **dadurch gekennzeichnet, daß** die Umsetzung unter Rückfluß des flüssigen Reaktionsmediums erfolgt.

## Claims

1. A process for the production of at least one Grignard compound, **characterised in that** magnesium is reacted in a suitable liquid reaction medium under a protective gas atmosphere with at least one halosubstituted organic compound with microwave irradiation.

2. A process according to claim 1, **characterised in that** the magnesium is present in the form of magnesium strip or in multiparticulate form, preferably in the form of chips or powder, particularly preferably in the form of chips.

3. A process according to claim 1 or claim 2, **characterised in that** at least one ether compound or a mixture containing at least one ether compound is present as reaction medium.

4. A process according to claim 3, **characterised in that** the ether compound is selected from the group consisting of aliphatic ethers, cyclic ethers and aliphatic polyethers.

5. A process according to claim 4, **characterised in that** at least one dialkyl ether, preferably diethyl ether, dibutyl ether or a mixture thereof, is present as aliphatic ether.

6. A process according to claim 4 or 5, **characterised in that** tetrahydrofuran, 1,4-dioxane or a mixture thereof is present as cyclic ether.

7. A process according to any one of claims 4 to 6, **characterised in that** the aliphatic polyether is based on an alkylene glycol, preferably on ethylene glycol.

8. A process according to claim 7, **characterised in that** the polyether is selected from the group consisting of ethylene glycol dimethyl ether (monoglyme), diethylene glycol dimethyl ether (diglyme), triethylene glycol dimethyl ether (triglyme) and mixtures containing at least two of these polyethers.

9. A process according to any one of claims 1 to 8, **characterised in that** an aliphatic halogen compound, a cycloaliphatic halogen compound optionally comprising at least one heteroatom in the ring system or an aromatic halogen compound optionally comprising at least one heteroatom in the ring system is used as a halosubstituted organic compound.

10. A process according to claim 9, **characterised in that** the aliphatic halogen compound comprises 1 to 10 carbon atoms, preferably 1 to 5 carbon atoms, particularly preferably 1 to 3 carbon atoms.

11. A process according to claim 9, **characterised in that** the cycloaliphatic halogen compound comprises 3 to 8 carbon atoms.

12. A process according to any one of claims 1 to 11, **characterised in that** the halogen compound is substituted with fluorine, chlorine, bromine or iodine, preferably with chlorine, bromine or iodine, particularly preferably with bromine or iodine.

13. A process according to claim 9, **characterised in that** the aromatic halogen compound used is a compound of the general formulae I or II, 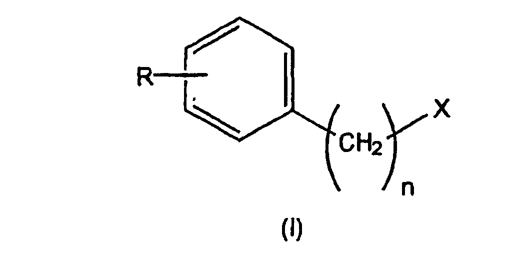 with n = 1, 2 or 3 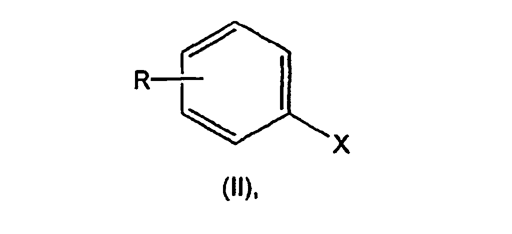 in which X in each case denotes F, Cl, Br or I,
and the substituent R is selected from the group consisting of F, Cl, Br, I, a C₁₋₅ alkyl residue optionally at least mono-substituted with fluorine, a C₁₋₅ alkoxy residue, an NO₂ residue, an N(R¹)₂ residue, a CON(R¹)₂ residue, an SR¹ residue, an SOR¹ residue, an SO₂R¹ residue, an SO₂N(R¹)₂ residue, a residue of the general formulae III to VI 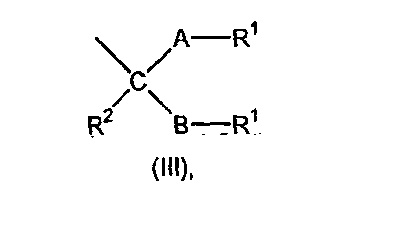 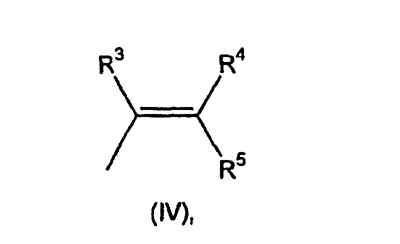 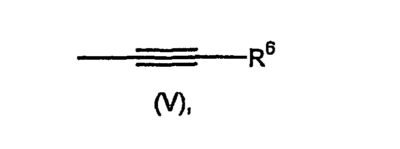 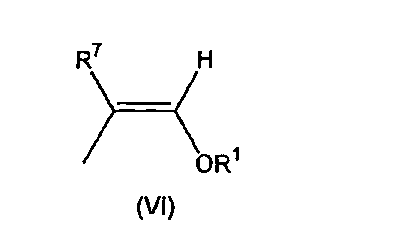 and an aryl or heteroaryl residue, which may optionally be at least mono-substituted with R', wherein
A and B, identical or different, denote O, S or NH, and preferably both denote O,
the residue R¹ in each case denotes a C₁₋₆ alkyl residue, preferably a C₁₋₃ alkyl residue, particularly preferably a methyl or ethyl residue
or - in the case of the general formula III - the two residues R¹ as ring members mean the group CH₂-CH₂ or CH₂-CH₂-CH₂,
the residues R², R³, R⁴, R⁵, R⁶ and R⁷, in each case mutually independently, denote H, a C₁₋₆ alkyl residue or an optionally substituted aryl residue and/or an aryl residue optionally comprising a heteroatom, and
the residue R' is selected from the group consisting of F, Cl, Br, I, a C₁₋₅ alkyl residue optionally at least mono-substituted with fluorine, a C₁₋₅ alkoxy residue, an NO₂ residue, an N(R¹)₂ residue, a CON(R¹)₂ residue, an SR¹ residue, an SOR¹ residue, an SO₂R¹ residue, an SO₂N(R¹)₂ residue and a residue of the above-stated general formulae III to VI.

14. A process according to claim 13, **characterised in that** X denotes Cl, Br or I, preferably Br or I.

15. A process according to claim 13 or 14, **characterised in that** the residue R¹ denotes a C₁₋₃ alkyl residue, preferably a methyl or ethyl residue.

16. A process according to any one of claims 13 to 15, **characterised in that** the residues R², R³, R⁴, R⁵, R⁶ and R⁷, in each case mutually independently, denote a C₁₋₃ alkyl residue preferably a methyl or ethyl residue, or an optionally substituted phenyl residue, preferably an unsubstituted phenyl residue.

17. A process according to any one of claims 13 to 16, **characterised in that** A and B in each case denote O.

18. A process according to claim 13, **characterised in that** the compound of the general formula II is selected from the group consisting of o-bromoanisole, m-bromoanisole, p-bromoanisole, o-bromobenzotrifluoride, m-bromobenzotrifluoride and p-bromobenzotrifluoride, preferably m-bromoanisole.

19. A process according to claim 13, **characterised in that** p-chlorobenzylchloride is used as compound of the general formula I.

20. A process according to any one of claims 1 to 19, **characterised in that** the magnesium and the halosubstituted organic compound(s) are used in equimolar quantities.

21. A process according to any one of claims 1 to 20, **characterised in that** the protective gas atmosphere is an atmosphere of argon and/or nitrogen.

22. A process according to any one of claims 1 to 21, **characterised in that** microwave irradiation proceeds at a power of 100 to 1200 watt, particularly preferably 100 to 250 watt.

23. A process according to any one of claims 1 to 22, **characterised in that** irradiation is performed with microwaves of a frequency in the range of 850 to 2250 MHz, preferably in the range 915 ± 25 MHz, 2450 ± 13 MHz, 5800 ± 75 MHz or 22125 ± 125 MHz.

24. A process according to any one of claims 1 to 23, **characterised in that** duration of the reaction amounts to no more than 60 minutes, preferably no more than 45 minutes and particularly preferably no more than 30 minutes.

25. A process according to any one of claims 1 to 24, **characterised in that** the reaction proceeds at a temperature of up to at most the boiling temperature of the liquid reaction medium.

26. A process according to claim 25, **characterised in that** the reaction proceeds with refluxing of the liquid reaction medium.

## Revendications

1. Procédé de fabrication d'au moins un composé de Grignard, **caractérisé en ce qu'**on fait réagir du magnésium dans un milieu réactionnel liquide approprié, sous atmosphère de gaz protecteur, avec au moins un composé organique halogéno-substitué, sous irradiation par micro-ondes.

2. Procédé selon la revendication 1, **caractérisé en ce que** le magnésium se présente sous forme de ruban de magnésium ou sous forme multi-particulaire, de préférence sous forme de copeaux ou de poudre, particulièrement préféré sous forme de copeaux.

3. Procédé selon la revendication 1 ou 2, **caractérisé en ce que** le milieu réactionnel est au moins un composé éther ou un mélange contenant au moins un composé éther.

4. Procédé selon la revendication 3, **caractérisé en ce que** le composé éther est choisi dans le groupe constitué d'éthers aliphatiques, éthers cycliques et polyéthers aliphatiques.

5. Procédé selon la revendication 4, **caractérisé en ce qu'**on utilise, comme éther aliphatique, au moins un éther dialkylique, de préférence l'éther diéthylique, l'éther dibutylique ou leur mélange.

6. Procédé selon la revendication 4 ou 5, **caractérisé en ce qu'**on utilise, comme éther cyclique, le tétrahydrofuranne, le 1,4-dioxane ou leur mélange.

7. Procédé selon l'une quelconque des revendications 4 à 6, **caractérisé en ce que** le polyéther aliphatique est à base d'un alkylèneglycol, de préférence l'éthylèneglycol.

8. Procédé selon la revendication 7, **caractérisé en ce que** le polyéther est choisi dans le groupe constitué d'éther diméthylique d'éthylèneglycol (monoglyme), éther diméthylique de diéthylèneglycol (diglyme) et éther diméthylique de triéthylèneglycol (triglyme) et de mélanges d'au moins deux de ces polyéthers.

9. Procédé selon l'une quelconque des revendications 1 à 8, **caractérisé en ce qu'**on utilise, comme composé organique halogéno-substitué, un composé halogéné aliphatique, un composé halogéné cycloaliphatique comprenant, le cas échéant, au moins un hétéro-atome dans le système cyclique ou un composé halogéné aromatique comprenant, le cas échéant, au moins un hétéro-atome dans le système cyclique.

10. Procédé selon la revendication 9, **caractérisé en ce que** le composé halogéné aliphatique comporte 1 à 10 atome(s) de carbone, de préférence 1 à 5 atome(s) de carbone, particulièrement préféré 1 à 3 atome(s) de carbone.

11. Procédé selon la revendication 9, **caractérisé en ce que** le composé halogéné cyclo-aliphatique comporte 3 à 8 atomes de carbone.

12. Procédé selon l'une quelconque des revendications 1 à 11, **caractérisé en ce que** le composé halogéné est substitué par du fluor, du chlore, du brome ou de l'iode, de préférence par du chlore, du brome ou de l'iode, particulièrement préféré par du brome ou de l'iode.

13. Procédé selon la revendication 9, **caractérisé en ce qu'**on utilise, comme composé halogéné aromatique un composé de formule générale I ou II 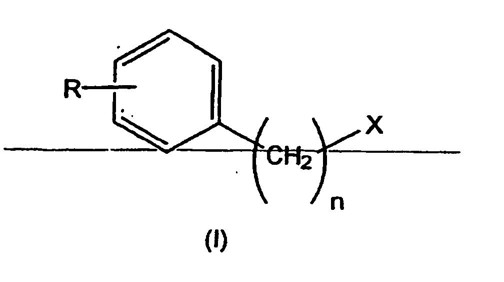 avec n = 1, 2 ou 3 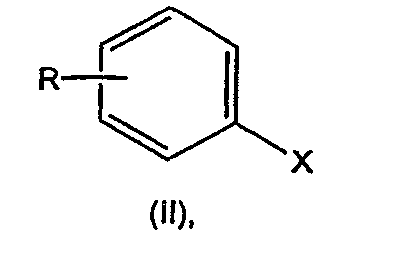 dans lesquelles X représente dans chaque cas F, Cl, Br ou I,
et le substituant R est choisi dans le groupe constitué de F, Cl, Br, I, un radical alkyle en C₁₋₅, le cas échéant substitué au moins une fois par du fluor, un radical alcoxy en C₁₋₅, un radical NO₂ , un radical N(R¹)₂, un radical CON(R¹)₂, un radical SR¹, un radical SOR¹, un radical SO₂R¹, un radical SO₂N(R¹)₂, un radical des formules générales III à VI 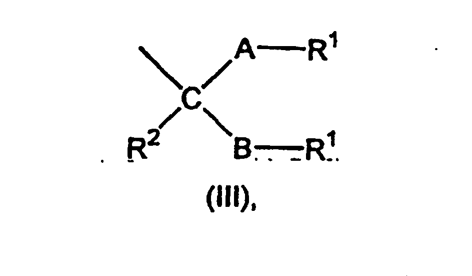 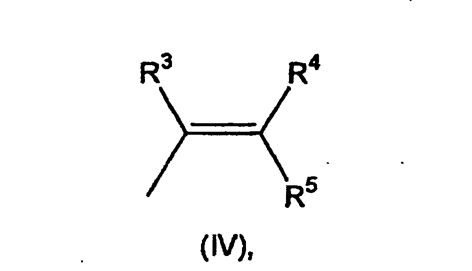 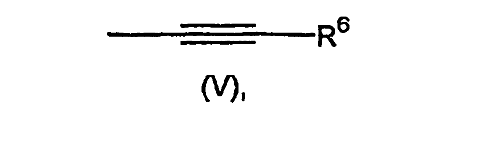 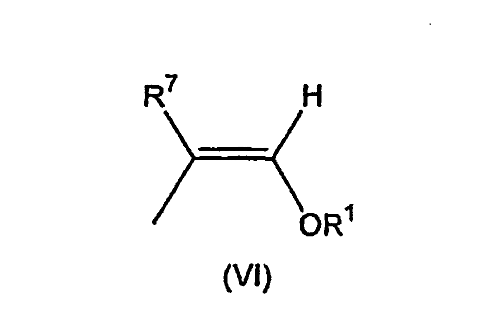 et un radical aryle ou hétéro-aryle, qui peut être, le cas échéant, substitué au moins une fois avec R', formules dans lesquelles
A et B sont identiques ou différents et représentent O, S ou NH,
le radical R¹ représente à chaque fois un radical alkyle en C₁₋₆,
ou, dans le cas de la formule générale III, les deux radicaux R¹ représentent, comme termes cycliques, le groupe CH₂-CH₂ ou CH₂-CH₂-CH₂,
les radicaux R², R³, R⁴, R⁵, R⁶ et R⁷ représentent, chacun indépendamment des autres, H, un radical alkyle en C₁₋₆, ou un radical aryle le cas échéant substitué et/ou comprenant le cas échéant un hétéro-atome, et
le radical R' est choisi dans le groupe constitué de F, Cl, Br, I, un radical alkyle en C₁₋₅, le cas échéant substitué au moins une fois par du fluor, un radical alcoxy en C₁₋₅, un radical NO₂, un radical N(R¹)₂, un radical CON(R¹)₂, un radical SR¹, un radical SOR¹, un radical SO₂R¹, un radical SO₂N(R¹)₂, et un radical des formules générales III à VI ci-avant mentionnées.

14. Procédé selon la revendication 13, **caractérisé en ce que** X représente Cl, Br ou I, de préférence Br ou I.

15. Procédé selon la revendication 13 ou 14, **caractérisé en ce que** le radical R¹ représente un radical alkyle en C₁₋₃, de préférence un radical méthyle ou éthyle.

16. Procédé selon une quelconque des revendications 13 à 15, **caractérisé en ce que** les radicaux R², R³, R⁴, R⁵, R⁶ et R⁷ représentent, chacun indépendamment des autres, un radical alkyle en C₁₋₃ de préférence un radical méthyle ou éthyle, ou un radical phényle, le cas échéant substitué, de préférence un radical phényle non substitué.

17. Procédé selon l'une quelconque des revendications 13 à 16, **caractérisé en ce que** A et B représentent à chaque fois O.

18. Procédé selon la revendication 13, **caractérisé en ce que** le composé de formule générale II est choisi dans le groupe constitué de o-bromanisol, m-bromanisol, p-bromanisol, o-bromobenzotrifluorure, m-bromobenzotrifluorure, et p-bromobenzotrifluorure, de préférence m-bromanisol.

19. Procédé selon la revendication 13, **caractérisé en ce qu'**on utilise, comme composé de formule générale I, le chlorure de p-chlorobenzyle.

20. Procédé selon l'une quelconque des revendications 1 à 19, **caractérisé en ce que** le magnésium et le(les) composé(s) organique(s) halogéno-substitué(s) est(sont) utilisé(s) en quantités équimolaires.

21. Procédé selon l'une quelconque des revendications 1 à 20, **caractérisé en ce que** l'atmosphère de gaz protecteur est une atmosphère d'argon et/ou d'azote.

22. Procédé selon l'une quelconque des revendications 1 à 21, **caractérisé en ce que** l'irradiation par micro-ondes a lieu à une puissance de 100 à 1 200 watts, de préférence 100 à 250 watts.

23. Procédé selon l'une quelconque des revendications 1 à 22, **caractérisé en ce que** l'irradiation par micro-ondes d'une fréquence est située dans la plage de 850 à 2 250 MHz, de préférence dans la plage de 915 +/- 25 MHz, 2 450 +/ 13 MHz, 5 800 +/- 75 MHz ou 22 125 +/- 125 MHz.

24. Procédé selon l'une quelconque des revendications 1 à 23, **caractérisé en ce que** la durée de réaction n'est pas supérieure à 60 minutes, de préférence pas supérieure à 45 minutes, particulièrement préféré pas supérieure à 30 minutes.

25. Procédé selon l'une quelconque des revendications 1 à 24, **caractérisé en ce que** la transformation a lieu à une température allant au maximum jusqu'à la température d'ébullition du milieu réactionnel liquide.

26. Procédé selon la revendication 25, **caractérisé en ce que** la transformation a lieu au reflux du milieu réactionnel liquide.
